# EUROPEAN PATENT APPLICATION

(11) **EP 4 372 175 A1**
(43) Date of publication of application: **22.05.2024**
(21) Application number: 22208625.8
(22) Date of filing: 21.11.2022
(51) Int. Cl.: E04F 11/04, B26D 7/00, B26F 1/38, B23Q 1/01, B62B 3/14, B23Q 1/00, E04G 27/00, E06C 1/00

(54) **DIE CUTTING MACHINE HAVING A MOBILE STAIR AND ASSEMBLY WITH A DIE CUTTING MACHINE**

(71) Applicant: Bobst (Shanghai) Ltd, Shanghai 201613 (CN)
(72) Inventor: ZHANG, Kyle, Shanghai, 201613 (CN); YU, Marco, Shanghai, 201613 (CN)
(74) Representative: Wagner, Sigrid

(57) **Abstract**

A die cutting machine has a mobile stair (14), the mobile stair (14) being able to assume a retracted position and an extended position, wherein in the extended position the mobile stair (14) is accessible by an operator. The mobile stair (14) is configured to be pushed into the retracted position by a transport rack (16) and pulled into the extended position when the transport rack (16) is pulled in the opposite direction. A coupling mechanism (30) is arranged on the mobile stair (14) that is configured to couple the transport rack (16) to the mobile stair (14) to pull the mobile stair (14) from the retracted into the extended position and to decouple the transport rack (16) from the mobile stair (14) when the transport rack (16) is moved from the die cutting machine (12) beyond the extended position of the mobile stair (14). An assembly with a die cutting machine has a transport rack (16) separate from the die cutting machine (12) that is configured to be pushed against the die cutting machine (12) and removed therefrom, having a counterpart portion for engaging with the coupling mechanism (30).

## Description

The invention relates to a die cutting machine having a mobile stair and to an assembly with a die cutting machine.

Die cutting machines are used to automatically cut packaging materials such as paper, carton, or corrugated cardboard into blanks that e.g. are subsequently folded into an outer package.

Sheets of raw material are transferred to the die cutting machine by transport racks that are pushed against the die cutting machine. Also, cut blanks are stacked onto another transport rack and removed from the die cutting machine.

In certain types of die cutting machines, these loading and unloading steps take place in the region where a mobile stair is arranged. The mobile stair allows an operator access to a podium of the die cutting machine when the mobile stair is in an extended position. However, when a transport rack is used for loading or unloading of material, the mobile stair needs to be moved into a retracted position, e.g. in a recess underneath the die cutting machine, to make room for the transport rack.

In this case, the mobile stair is linearly displaced along the floor and hidden inside the die cutting machine. The transport rack replaces the mobile stair, so that raw materials and finished products can be easily transferred from the transport rack to the die cutting machine or from the die cutting machine to the transport rack.

It is known to position the mobile stair on oblique tracks so that the mobile stair moves from the retracted position into the extended position by gravity. However, the mobile stair can get stuck, i.e. by waste getting into the tracks, costing the operator valuable time.

It is an object of the invention to improve movement of mobile stair between the retracted and extended position.

This object is achieved in a die cutting machine having a mobile stair, the mobile stair being able to assume a retracted position and an extended position, wherein in the extended position the mobile stair is accessible by an operator, the mobile stair being configured to be pushed into the retracted position by a transport rack and pulled into the extended position when the transport rack is pulled in the opposite direction. A coupling mechanism is arranged on the mobile stair that is configured to couple the transport rack to the mobile stair to pull the mobile stair from the retracted into the extended position and to decouple the transport rack from the mobile stair when the transport rack is moved from the machine beyond the extended position of the mobile stair.

According to the invention, the transport rack is used to move the mobile stair between the retracted and the extended position. When the transport rack is pushed against the die cutting machine, the mobile stair is automatically pushed into its retracted position. In the same way, when the transport rack is removed from the die cutting machine, the mobile stair is automatically pulled back into its extended position by the transport rack. As the motion of the transport rack provides the kinetic energy to move the mobile stair, the mobile stair is less prone to get stuck.

The mobile stair preferably comprises a locking mechanism that prevents a displacement of the mobile stair from the extended position into the retracted position. This prevents that the mobile stair is inadvertently pushed into the retracted position by an operator. The locking mechanism may be arranged near the floor.

In a preferred embodiment, the coupling mechanism has a pivot element pivotally arranged at the mobile stair and configured to interact with a counterpart portion on the transport rack. Using a pivoting motion has the advantage that the transport rack can easily and securely be coupled to and decoupled from the mobile stair.

The counterpart portion may be arranged on a lower end of a vertical portion of a frame of the transport rack.

Preferably, a connecting portion on the pivot element is configured to engage the counterpart portion to couple the transport rack to the mobile stair. In one embodiment, the connecting portion comprises a hook at the end of the pivot element facing away from the mobile stair, i.e., towards the transport rack. The counterpart portion e.g. has a corresponding connection opening that receives the connecting portion.

It is possible to provide two separate coupling mechanisms, preferably one on each side of the mobile stair.

The locking mechanism may have a stopper element that is fixedly mounted at the die cutting machine, and the pivot element engages the stopper element when the mobile stair is in the extended position, thereby preventing a displacement of the mobile stair into the retracted position.

The stopper element is preferably immovably fixed in position.

For instance, the stopper element is arranged at a guide rail for the transport rack and the mobile stair. Usually, the guide rail is arranged on the floor before the die cutting machine and can be considered to be a part of the die cutting machine.

The pivot element may be configured to be moved out of engagement with the stopper element when the pivot element is pivoted in a release direction to open the locking mechanism.

The stopper element engages e.g. the underside of the pivot element when the pivot element is in a locking position. When the pivot element is pivoted in release direction, it is preferably lifted from the stopper element so that the locking mechanism is opened.

The pivot element is preferably configured to pivot opposite to the release direction in a coupling direction, when the pivot element is disengaged from the stopper element and the mobile stair is pushed towards the retracted position or, at the latest, when the transport rack starts to be moved away from the die cutting machine. This motion may be used to bring the connecting portion into engagement with the counterpart portion to couple the pivot element with the transport rack.

A pivot axis of the pivot element is e.g. positioned outside of the center of gravity of the pivot element, or the pivot element may be pretensioned by a spring opposite to the release direction. Therefore, pivoting of the pivot element in coupling direction results automatically, when a force acting in release direction ceases.

Further, the above object is achieved with an assembly with a die cutting machine, wherein the assembly comprises a transport rack separate from the die cutting machine that is configured to be pushed against the die cutting machine and removed therefrom, having a counterpart portion for engaging with the coupling mechanism.

The counterpart portion and the pivot element may have corresponding contact faces that serve to pivot the pivot element when the transport rack is pushed against the mobile stair.

For instance, the counterpart portion comprises a connection opening that is configured to be engaged by the coupling mechanism, in particular by the connecting portion of the pivot element, to couple the mobile stair to the transport rack.

The mobile stair and the transport rack preferably have corresponding pushing faces, and a pushing force to transfer the mobile stair from the extended position to the retracted position is transferred from the transport rack to the mobile stair though the pushing faces. The pushing faces are e.g. realized on the edge of a step of the mobile stair and on the frame of the transport rack or on the counterpart portion.

Opening and closing of the coupling mechanism and of the locking mechanism are carried out purely mechanically without any need for any electric or pneumatic devices.

The invention will be described with regard to an exemplary embodiment, with reference to the enclosed drawings. In these:
- Figure 1 shows an assembly according to the invention, in a state where a transport rack starts to be pushed against a mobile stair of a die cutting machine according to the invention in the extended position;
- Figure 2 shows a detail of Figure 1;
- Figure 3 shows the assembly of Figure 1 in a state where the mobile stair starts to be pulled out of the retracted position;
- Figure 4 shows a detail of Figure 3;
- Figure 5 shows the assembly of Figure 1 in a state where a pivot element of a coupling mechanism begins to pivot into a release position from a locking position;
- Figure 6 shows the assembly of Figure 5 in a state where the pivot element is in a coupling position, engaging the transport rack;
- Figure 7 shows the assembly of Figure 5 in a state where the pivot element is pivoted back into the locking position;
- Figure 8 shows a schematic perspective view of the pivot element of the coupling mechanism; and
- Figure 9 shows a schematic perspective view of a stopper element of a locking mechanism.

For reasons of legibility, not all identical components are provided with reference signs in the figures.

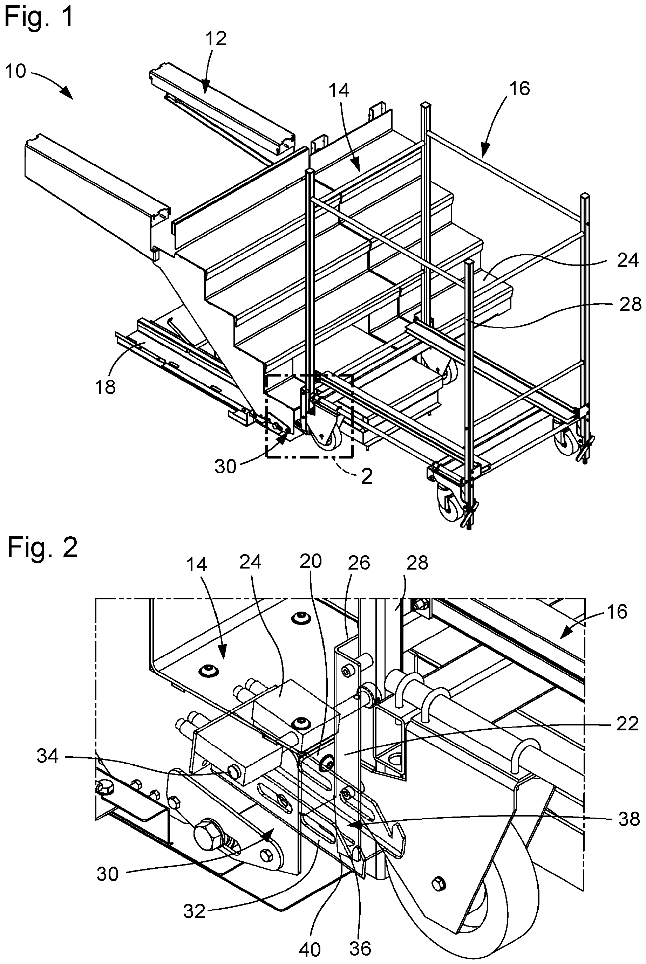

Figures 1 to 4 show an assembly 10 with a die cutting machine 12 (only hinted at in the figures) having a mobile stair 14, and with a transport rack 16 used to transfer raw sheet material to the die cutting machine 12 and/or transfer the finished products from die cutting machine 12.

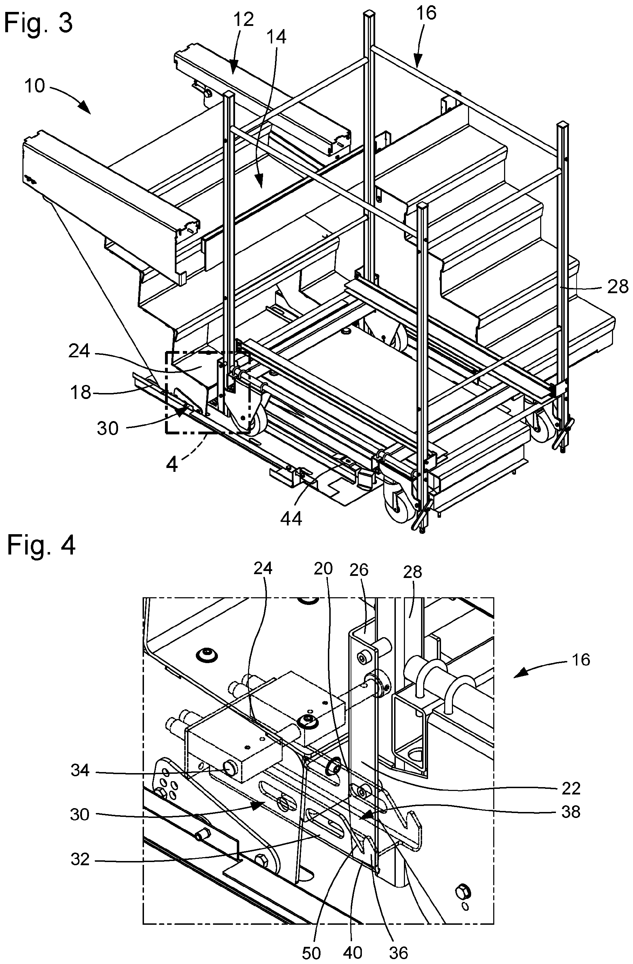

The mobile stair 14 can be moved linearly between an extended position (see Figure 1) and a retracted position (see Figure 3) along a set of guide rails 18 on the floor that are fixed in relation to the die cutting machine 12.

In the extended position, the mobile stair 14 is accessible for an operator to reach a podium of the die cutting machine 12 (not shown). In the retracted position, the mobile stair 14 is e.g. stored in a recess in the die cutting machine 12.

The mobile stair 14 is arranged so at the die cutting machine 12 that the transport rack 16 pushes the mobile stair 14 into the retracted position and takes up the position of the mobile stair 14 when the transport rack 16 is pushed against the die cutting machine 12.

The transport rack 16 engages the guide rails 18 when it arrives at the die cutting machine 12 and comes into contact with the mobile stair 14 in its extended position. In this example, the wheels of the transport rack 16 are guided in the guide rails 18.

On the transport rack 16 and on the mobile stair 14, a pair of complementary pushing faces 20, 22 is provided for transmitting a pushing force Fᵢ in a pushing direction D₁ towards the die cutting machine 12 from the transport rack 16 to the mobile stair 14 (see Figs. 1, 2 and 5). One of the pushing faces 20 is formed here on the front of the lowest step 24 of the mobile stair 14, while the other pushing face 22 is formed here by a front side of a U-profile 26 mounted to a lower part of a frame 28 of the transport rack 16.

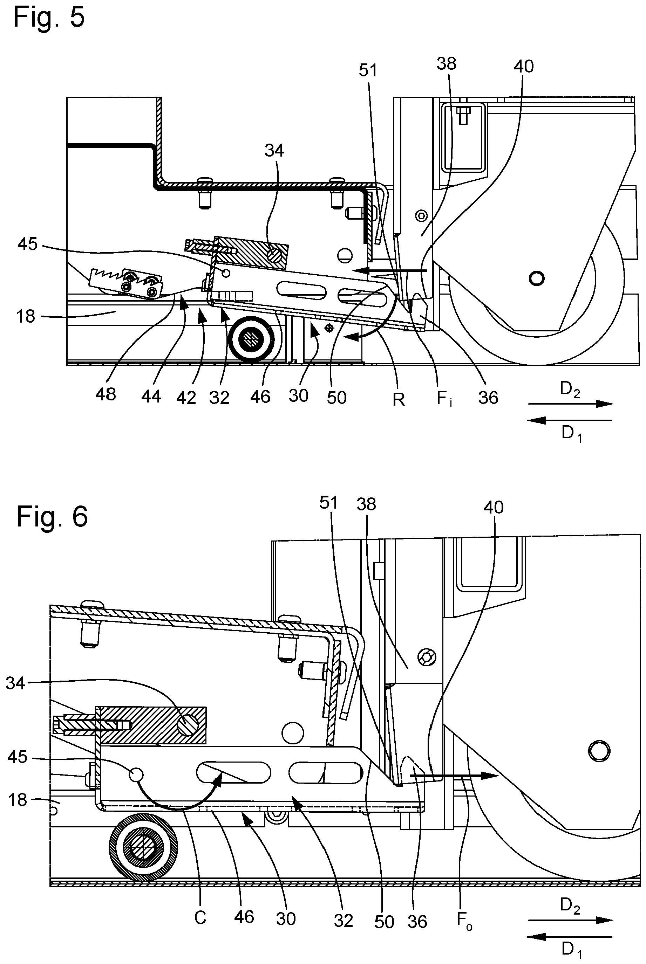

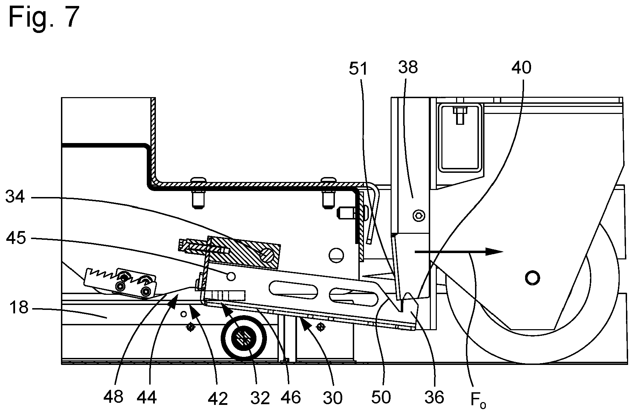

A coupling mechanism 30 is provided on the mobile stair 14 that interacts with the transport rack 16 and serves to mechanically couple the transport rack 16 to the mobile stair 14. In particular, the coupling mechanism 30 allows the mobile stair 14 to be pulled out of the retracted position into the extended position in a pulling direction D₂ by the transport rack 16 (see Figs. 6 and 7).

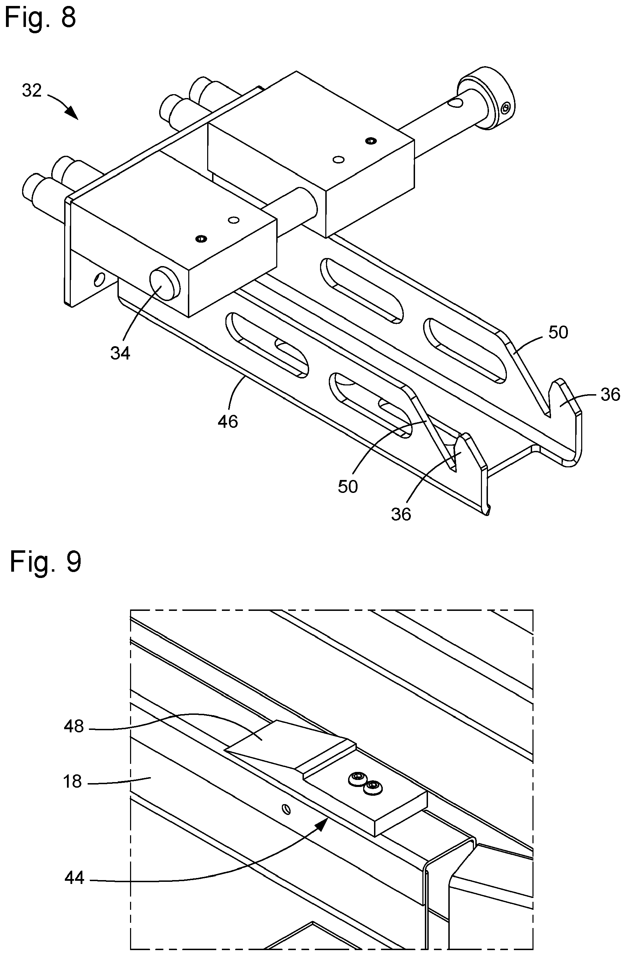

The coupling mechanism 30 comprises a pivot element 32 pivotally arranged around a pivot axis 34 on the mobile stair 14 (see also Fig. 8).

In this example, the pivot element 32 is arranged at an underside of the lowest step 24 of the mobile stair 14.

At its end pointing away from the mobile stair 14 and towards the transport rack 16, the pivot element 32 has a hook-shaped connecting portion 36.

A counterpart portion 38 is arranged on the transport rack 16 and, in this example, is formed by the U-profile 26.

A lower open end of the U-profile 26 forms a connection opening 40. The connecting portion 36 engages the connection opening 40 when the transport rack 16 is in contact with the mobile stair 14 and the pivot element 32 is pivoted in a coupling direction C (counterclockwise in this example, see Fig. 6).

Further, a locking mechanism 42 is provided on the mobile stair 14 and the die cutting machine 12 that prevents the movement of the mobile stair 14 from the extended position into the retracted position when closed.

The locking mechanism 42 comprises a stopper element 44 fixedly arranged at the die cutting machine 12, in this example on top of the guide rail 18 (see also Figure 9).

A bottom portion 46 of the pivot element 32 is configured to engage with the stopper element 44 when the locking mechanism 42 is in the closed state (see also Fig. 8).

A ramp 48 is formed on the stopper element 44 on the side facing the die cutting machine 12. Generally, the stopper element 44 has a shape that holds the pivot element 32 in a position in which the connecting portion 36 is tilted slightly downward when the locking mechanism 42 is closed.

When the transport rack 16 is pushed toward the die cutting machine 12 by an operator, it comes into contact with the mobile stair 14 in its extended position. The pushing face 22 on the transport rack 16 touches the pushing face 20 on the mobile stair 14. At the same time, the counterpart portion 38 on the transport rack 16 comes into contact with the pivot element 32, here at an oblique contact face 50 that separates the connecting portion 36 from the rest of the pivot element 32. A corresponding contact face 51 is arranged at the counterpart portion 38 on the outside of the U-profile 26.

The locking mechanism 42 is in its closed state. The pivot element 32 is in a locked position, where the bottom portion 46 of the pivot element 32 is in engagement with the stopper element 44, and the stopper element 44 keeps the mobile stair 14 in the extended position against the pushing force Fᵢ in pushing direction D₁.

The force Fᵢ acting on the oblique face 50 pivots the pivot element 32 around the pivot axis 34 in release direction R (see Fig. 5), thereby lifting the bottom portion 46 of the pivot element 32 from the stopper element 44 and ending the engagement between the stopper element 44 and the pivot element 32. The pivot portion 32 is now in its release position, and the locking mechanism 42 is opened.

When the transport rack 16 is pushed further in pushing direction D₁, force is transmitted by the pushing faces 20, 22 to the mobile stair 14, and the mobile stair 14 is pushed all the way into its retracted position (see Figs. 3 and 4).

In the example shown, the center of gravity 45 of the pivot element 32 is arranged in pushing direction D₁ in front of the pivot axis 34. Therefore, the pivot element 32 swivels into a coupling position in a coupling direction C, when no force Fᵢ acts on the oblique face 50 (see Fig. 6).

Alternatively, the pivot element 32 may be pretensioned by a spring acting opposite to the release direction R (not shown).

During this motion of the pivot element 32, the connecting portion 36 comes into engagement with the connection opening 40 so that the pivot element 32 is hooked into the counterpart portion 38 (see Figs. 4 and 6).

When the transport rack 16 is pulled away from die cutting machine 12 (see e.g. Fig. 6), the connecting portion 36 stays in engagement with the connection opening 40 in the counterpart portion 38. Therefore, the force Fₒ provided by the transport rack 16 acts on the mobile stair 14 in pulling direction D₂, and the mobile stair 14 is pulled from the retracted position into the extended position.

When the pivot element 32 reaches the ramp 48 on the stopper element 44, the pivot element 32 is tilted in release direction R, and the connecting portion 36 slips out of the connection opening 40, thereby releasing the engagement between the pivot element 32 and the counterpart portion 38 and opening the coupling mechanism 30. The transport rack is not coupled to the mobile stair 14 anymore, and the transport rack 16 can be removed from the die cutting machine 12.

At the same time, the bottom portion 46 of the pivot element 32 again reaches its locking position and contacts the stopper element 44, and the locking mechanism 42 closes.

Opening and closing of the coupling mechanism 30 and of the locking mechanism 42 are managed without direct manual interference of an operator only by pushing and pulling on the transport rack 16. Both the coupling mechanism 30 and the locking mechanism 42 operate purely mechanically.

Generally, coupling mechanisms 30 and locking mechanisms 42 may be provided on both sides of the mobile stair 14.

When the transport rack 16 is configured to be lifted to transfer raw materials and finished products, the counterpart portion 38 may lift from the connecting portion 36. When the transport rack 16 is lowered again, the counterpart portion 38 engages the connecting portion 36 again.

## Claims

1. A die cutting machine having a mobile stair (14), the mobile stair (14) being able to assume a retracted position and an extended position, wherein in the extended position the mobile stair (14) is accessible by an operator, the mobile stair (14) being configured to be pushed into the retracted position by a transport rack (16) and pulled into the extended position when the transport rack (16) is pulled in the opposite direction, a coupling mechanism (30) being arranged on the mobile stair (14) that is configured to couple the transport rack (16) to the mobile stair (14) to pull the mobile stair (14) from the retracted into the extended position and to decouple the transport rack (16) from the mobile stair (14) when the transport rack (16) is moved from the die cutting machine (12) beyond the extended position of the mobile stair (14).

2. Die cutting machine according to claim 1, wherein the mobile stair (14) comprises a locking mechanism (42) that prevents a displacement of the mobile stair (14) from the extended position into the retracted position.

3. Die cutting machine according to any of the preceding claims, wherein the coupling mechanism (30) comprises a pivot element (32) pivotally arranged at the mobile stair (14) configured to interact with a counterpart portion (38) on the transport rack (16).

4. Die cutting machine according to claim 3, wherein a connecting portion (36) on the pivot element (32) is configured to engage the counterpart portion (38) to couple the transport rack (16) to the mobile stair (14).

5. Die cutting machine according to claims 2 to 4, wherein the locking mechanism (42) comprises a stopper element (44) that is fixedly mounted at the die cutting machine (12) and the pivot element (32) engages the stopper element (44) when the mobile stair (14) is in the extended position, thereby preventing a displacement of the mobile stair (14) into the retracted position.

6. Die cutting machine according to claims 4 and 5, wherein the pivot element (32) is configured to be moved out of engagement with the stopper element (44) when the pivot element (32) is pivoted in a release direction (R).

7. Die cutting machine according to claim 5 or claim 6, wherein the pivot element (32) is configured to pivot opposite to the release direction (R) when the pivot element (32) is disengaged from the stopper element (44) and the mobile stair (14) is pushed towards the retracted position.

8. Die cutting machine according to claim 7, wherein a pivot axis (34) of the pivot element (32) is positioned outside of the center of gravity (45) of the pivot element (32) or the pivot element (32) is pretensioned by a spring opposite to the release direction (R).

9. An assembly with a die cutting machine according to any of the preceding claims, wherein the assembly (10) comprises a transport rack (16) separate from the die cutting machine (12) that is configured to be pushed against the die cutting machine (12) and removed therefrom, having a counterpart portion (38) for engaging with the coupling mechanism (30).

10. Assembly according to claim 9, wherein the counterpart portion (38) and the pivot element (32) have corresponding contact faces (50, 51) that serve to pivot the pivot element (32) when the transport rack (16) is pushed against the mobile stair (14).

11. Assembly according to claim 9 or claim 10, wherein the counterpart portion (38) comprises a connection opening (40) that is configured to be engaged by the coupling mechanism (30) to couple the mobile stair (14) to the transport rack (16).

12. Assembly according to claims 9 to 11, wherein the mobile stair (14) and the transport rack (16) comprise corresponding pushing faces (20, 22), and a pushing force (Fᵢ) to transfer the mobile stair (14) from the extended position to the retracted position is transferred from the transport rack (16) to the mobile stair (14) through the pushing faces (20, 22).
